Europäisches Patentamt

European Patent Office

Office européen des brevets

(19)

(11) Veröffentlichungsnummer: **0 269 779 B1**

(12) **EUROPÄISCHE PATENTSCHRIFT**

(45) Veröffentlichungstag der Patentschrift:
02.05.91 Patentblatt 91/18

(51) Int. Cl.⁵: **G01P 3/46, G01P 13/04**

(21) Anmeldenummer: **87103643.0**

(22) Anmeldetag: **13.03.87**

(54) **Verfahren und Vorrichtung zur Bestimmung der Winkelgeschwindigkeit aus zwei Signalen, die jeweils eine Funktion des Drehwinkels sind.**

(30) Priorität: **10.11.86 DE 3638298**

(43) Veröffentlichungstag der Anmeldung:
**08.06.88 Patentblatt 88/23**

(45) Bekanntmachung des Hinweises auf die Patenterteilung:
**02.05.91 Patentblatt 91/18**

(84) Benannte Vertragsstaaten:
**DE FR GB IT SE**

(56) Entgegenhaltungen:
**DE-B- 2 625 686**
**FR-A- 2 447 552**
**US-A- 3 662 252**

(56) Entgegenhaltungen:
**PATENT ABSTRACTS OF JAPAN, Band 7, Nr. 176 (P-214)[1321], 4. August 1983; & JP-A-58 79 165 (MITSUBISHI DENKI K.K.) 12-05-1983**
**PATENT ABSTRACTS OF JAPAN, Band 9, Nr. 148 (P-366)[1871], 22. Juni 1985; JP-A-60 25 454 (YOSHITERU TAKAHASHI) 08-02-1985**

(73) Patentinhaber: **VDO Adolf Schindling AG**
**Gräfstrasse 103**
**W-6000 Frankfurt/Main 90 (DE)**

(72) Erfinder: **Wallrafen, Werner**
**Hauptstrasse 127 b**
**W-6231 Sulzbach (DE)**

(74) Vertreter: **Klein, Thomas, Dipl.-Ing. (FH)**
**Sodener Strasse 9 Postfach 6140**
**W-6231 Schwalbach a. Ts. (DE)**

## Beschreibung

Die Erfindung bezieht sich auf ein Verfahren und eine Vorrichtung zur Bestimmung der Winkelgeschwindigkeit aus zwei von einem Winkelgeber erzeugten Ausgangssignalen, die bezüglich des Drehwinkels eines drehbaren Körpers sinusförmigen Funktionsverlauf aufweisen und gegenseitig um 90 Winkelgrad phasenverschoben sind, wobei der Betrag und das Vorzeichen der Winkelgeschwindigkeit durch Division der zeitlichen Ableitung eines ersten Ausgangssignals durch das zweite Ausgangssignal bestimmt werden. Ein derartiges Verfahren und Vorrichtung zur Durchführung ist aus der Druckschrift "PATENT ABSTRACTS OF JAPAN, Band 7, Nr. 176 (P-214)(1321), 4. August 1983, JP-A-58 69 165", bekannt. Grenzprobleme entstehen bei der bekannten Anordnung in den Winkelbereichen, in denen das zweite Ausgangssignal gegen Null geht rind die Division nicht mehr erlaubt ist.

Für relativ langsame lineare oder rotierende Bewegungen ist das Erfassen der momentanen Geschwindigkeit schwierig und aufwendig. Bei Drehzahlgebersystemen oder bei Winkelencodern sind für die fortlaufende Bestimmung der Winkelgeschwindigkeit hohe Auflösungen erforderlich, da durch eine sequentielle, diskrete Drehzahlinformation störende Sprünge in den Winkelgeschwindigkeitswerten auftreten. Bei zu geringer Pulszahl je Umdrehung muß daher eine Mittelwertsbildung durchgeführt werden, die eine Verzögerungszeit zur Folge hat und bei Echtzeitanwendungen vielfach nicht verwendet werden kann.

Mit einem Winkelgeber (z.B. Resolver, Potentiometer, Magnetfeldsensor usw.) läßt sich der momentane Positionswinkel detektieren. Eine weit verbreitete Signalform ist das Sinus-Cosinus-System, mit dem der Drehwinkel eines Drehkörpers gegenüber einer Nullage eindeutig definiert werden kann. Jede Winkeländerung verursacht eine entsprechende Signalveränderung des Sinus- bzw. Cosinus-Meßkanals.

Der Erfindung liegt demgemäß die Aufgabe zugrunde, ein Verfahren zur Bestimmung der Winkelgeschwindigkeit aus zwei von einem Winkelgeber erzeugten Ausgangssignalen, die bezüglich des Drehwinkels eines drehbaren Körpers sinusförmigen Funktionsverlauf aufweisen und gegenseitig um 90 Winkelgrad phasenverschoben sind, wobei der Betrag und das Vorzeichen der Winkelgeschwindigkeit durch Division der zeitlichen Ableitung eines ersten Ausgangssignals durch das zweite Ausgangssignal bestimmt werden, und eine Schaltungsanordnung zur Durchführung des Verfahrens zu entwickeln, bei denen die erwähnten Grenzprobleme in den Winkelbereichen, in denen das zweite Ausgangssignal gegen Null geht, nicht auftreten.

Diese Aufgabe wird mit einem Verfahren gemäß Anspruch 1 gelöst.

Mit dem erfindungsgemäßen Verfahren läßt sich vorteilhafterweise bei langsamen Drehbewegungen der augenblickliche Wert der Winkelgeschwindigkeit nach Betrag und Vorzeichen bestimmen. Das Verfahren ist nicht nur bei Drehbewegungen, sondern auch bei linearen Bewegungen anwendbar, die mechanisch in die Rotation eines Winkelgebers umgewandelt werden können. Der Wert für die Winkelgeschwindigkeit steht schon bei Bruchteilen von Vollkreisumdrehungen zur Verfügung. Dabei kann die Drehzahl ohne Restwelligkeit und ohne Totzeit mit dem Winkelgeber festgestellt werden.

Eine Vorrichtung zur Durchführung des vorstehend beschriebenen Verfahrens besteht erfindungsgemäß darin, daß dem Dividendeneingang einer Dividierschaltung ein Differenzierglied vorgeschaltet ist, daß dem Differenzierglied und dem Divisoreingang der Dividierschaltung jeweils gemeinsam betätigbare Umschalter vorgeschaltet sind, über deren Eingänge das erste Ausgangs- signal des Winkelgebers im Bereich außerhalb der Nulldurchgänge an das Differenzierglied und das zweite Ausgang- signal an den Divisoreingang gelegt sind und daß im Bereich der Nulldurchgänge die Reihenfolge des ersten und zweiten Ausgangs- signals durch die Umschalter umgekehrt ist und daß eine Phasenkorrektur durch einen Subtrahierer über einen Umschaltkontakt vorgenommen wird. Die Umschaltung kann vorzugsweise in Abhängigkeit von der Winkellage gegenüber einer Bezugslage erfolgen. Bevor beim jeweiligen Cosinussignal die Winkellage 90° bzw. 270° und beim Sinussignal die Winkellage 0° und 180° erreicht werden, wird auf den jeweils anderen Kanal umgeschaltet. Bei dieser sehr einfach aufgebauten Schaltung werden Umschalter benötigt, so daß für die Dauer des Umschaltvorgangs eine Unterbrechung in der Ausgabe der Winkelgeschwindigkeitswerte auftritt.

Vorzugweise sind das Differenzierglied, die Dividierschaltung und die Umschalter analog arbeitende Schaltungen. Derartige Schaltungen haben eine hohe Signalverarbeitungsgeschwindigkeit.

Die Erfindung wird im folgenden anhand eines in einer Zeichnung dargestellten Ausführungsbeispiels näher beschrieben, aus dem sich weitere Einzelheiten, Merkmale und Vorteile ergeben.

Es zeigen

Fig. 1 ein Blockschaltbild einer ersten Anordnung zur Bestimmung der Winkelgeschwindigkeit nach Betrag und Vorzeichen aus zwei, von einem Winkelgeber abgegebenen Signalen,

Fig. 2a bis Fig. 2d Zeidiagramme der beiden vom Winkelgeber erzeugten Signale und der Ableitungen nach der Zeit der beiden Signale für den Fall konstanter Winkelgeschwindigkeit,

Fig. 3 ein Schalbild einer ersten Anordnung zur Bestimmung des Vorzeichens der Winkelgeschwindigkeit aus zwei, von einem Winkelgeber erzeugten Signalen,

Fig. 4 ein Schaltbild einer zweiten Anordnung zur Bestimmung des Vorzeichens der Winkelgeschwindigkeit aus zwei, von einem Winkelgeber erzeugten Signalen.

Ein Winkelgeber (1), vorzugsweise ein Resolver, mit nachgeschalteter Aufbereitungselektronik (2) liefert zwei Ausgangs- signale $U_{S1}$ und $U_{S2}$, die als Funktion des Drehwinkels sinusförmigen Verlauf aufweisen. Durch eine bestimmte geometrische Anordnung der Gebersensorik wird erreicht, daß die sinusförmigen Ausgangs-signale gegeneinander um 90° des Drehwinkels phasenverschoben sind. Für die Ausgangs- signale $U_{S1}$ und $U_{S2}$ gelten die Beziehungen :

$$U_{S1} = U_0 \cdot \sin \alpha \text{ und}$$
$$U_{S2} = U_0 \cdot \cos \alpha,$$

worin $U_0$ eine konstante Spannung und $\alpha$ der Positionswinkel eines Sensors sind.

Wird ein beliebiger Winkel eingestellt ($\alpha$ = konstant), sind die beiden Ausgangs Signale $U_{S1}$ und $U_{S2}$ reine Gleichspannungssignale. Wird der Winkel $\alpha_1$ nach $\alpha_2$ verändert, ändern sich die beidein Signale $U_{S1}$ und $U_{S2}$ gemäß den ober angegebenen Beziechungen. Dabei müssen sich nicht unbedingt die Vorzeichen verändern. Viele Sensoren, z.B. Druck, Temperatur oder magnetische Feldstärke, liefern ein Ausgangssignal, welche von den Parametern abhängen, also auch von der Zeit. Trotzdem sind diese Signale keine Wechselgrößen im üblichen Sinn.

Handelsübliche induktive Resolver liefern Ausgangssignale der Form :

$$U_1 = U_0 \cdot \sin \omega t \cdot \sin \alpha \text{ und}$$
$$U_2 = U_0 \cdot \sin \omega t \cdot \cos \alpha$$

mit $U_1 \cdot \sin \omega t$ als Generatorwechselspannung und $\omega$ als Kreisfrequenz.

Die Signale $U_1$ und $U_2$ sind sinusförmige Wechselspannungen, deren Amplitude und Phase eine Funktion des Positionswinkels ist. Bei Änderung des Winkels $\alpha$ wird praktisch die Generator-Wechselspannung moduliert. Die vorstehend angegebene Art von Signalen wird in der Aufbereitungselektronik (2) nicht verwendet.

Aus der Sinus-Cosinus-Definition für $U_{S1}$ und $U_{S2}$ läßt sich der Winkel $\alpha$ nach der trigonometrischen Bezie-hung $\alpha = \arctan U_{S1}/U_{S2}$ bestimmen (mit $U_{S1} = U_0 \cdot \sin \alpha$ und $U_{S2} = U_0 \cdot \cos \alpha$).

Ein Ausgang (3) der Aufbereitungselektronik (2) ist an den Ruhestromeingang eines ersten Umschaltkontakts (5) und an den Arbeitsstromeingang eines zweiten Umschaltkontakts (6) angeschlossen. Ein zweiter Ausgang (4) der Aufbereitungselektronik (2) ist mit dem Arbeitsstromeingang des Umschaltkontakts (5) und dem Ruhestromeingang des Umschaltkontakts (6) verbunden. Der Ausgang des Umschalterkontakts (5) ist an ein Differenzierglied (7) angeschlossen, dem der Dividendeneingang einer Dividierschaltung (8) nachgeschaltet ist. Dem Ausgang des Umschalterkontakts (6) ist der Divisoreingang der Dividierschaltung (8) nachgeschaltet. Beide Umschalterkontakte (5, 6) sind gemeinsam durch einen Nullspannungskomparator (11) betätigbar, der einen mit dem Ausgang (4) verbundenen Eingang aufweist. Die Dividierschaltung (8) ist ausgangsseitig einerseits an den Eingang eines Subtrahierers (9) und andererseits an den Ruhestromeingang eines Umschaltkontakts (10) angeschlossen, dessen Arbeitsstromeingang mit dem Ausgang des Subtrahierers (9) verbunden ist, der eine Invertierung bewirkt. Der Umschalter (10) wird ebenfalls mit dem Nullspannungsdetektor (11) betätigt.

Allgemein gilt für jede Winkelposition zu jedem Zeitpunkt am Ausgang (3) :

$$S_1 = S_0 \cdot \sin \alpha, \text{ wobei } \alpha = f(t)$$

Hierbei sind mit $S_1$ der jeweilige Augenblickswert, mit $S_0$ die Amplitude und mit $\alpha$ der Augenblicksdrehwin-kel, d.h. der gegenüber einer Bezugsposition zurückgelegte Winkel zum Zeitpunkt t bezeichnet.

Am Ausgang (4) tritt eine Cosinusschwingung nach folgender Gleichung auf :

$$S_2 = S_0 \cdot \cos \alpha, \text{ worin } \alpha = f(t) \text{ und}$$

wobei mit $S_2$ der Augenblickswert des Signals bezeichnet ist.

Die Winkelgeschwindigkeit ergibt sich aus der Division der ersten Ableitung der Größe $S_1$ (t) nach der Zeit durch die Größe $S_2$ (t). Es gilt für die mit y bezeichnete Winkelgeschwindigkeit die Beziehung :

$$y = \frac{dS_1}{dt} / S_2 = \frac{S_0 \cdot \cos \alpha \cdot \frac{d\alpha}{dt}}{S_0 \cdot \cos \alpha} = \frac{d\alpha}{dt}$$

Das Differenzierglied (7) bildet aus $S_1$ (t) die 1. Ableitung nach der Zeit :

$$\frac{dS_1}{dt} = S_0 . \cos \alpha \cdot \frac{d\alpha}{dt}$$

die der Dividierschaltung (8) als Dividend zugeführt wird. Die Größe $S_2$ gelangt als Divisor in die Dividierschaltung (8), an deren Ausgang die Winkelgeschwindigkeit nach Betrag und Vorzeichen verfügbar ist.

Grenzprobleme entstehen im Bereich vor $\alpha = 90°$ und $\alpha = 270°$, da cos 90° und cos 270° Null sind und die Division nicht mehr erlaubt ist. Diese Probleme werden durch Umschaltung der Umschaltkontakte (5), (6) und (10) vermieden. Der Nullspannungskomparator (11) enthält vorzugsweise zwei Komparatoren, die je auf einen positiven und einen negativen Grenzwert ansprechen. Die Grenzwerte sind so gewählt, daß z.B. die Umschaltung bei einem Winkel $\alpha$ von 80 bzw. 100° und 260 bzw. 280° erfolgt. Es ist auch möglich, jeweils bei 45° bzw. 135° und 225° bzw. 315° die Kanäle umzuschalten. Nach der Umschaltung auf die Arbeitskontakte der Umschaltkontakte (5), (6) und (10) ergibt sich die Winkelgeschwindigkeit y nach folgender Beziehung :

$$-y = \frac{dS_2}{dt} / S_1 = \frac{-S_0 \cdot \sin \alpha \cdot \frac{d\alpha}{dt}}{S_0 \cdot \sin \alpha} = - \frac{d\alpha}{dt}$$

Durch den Subtrahierer (9) mit dem Verstärkungsfaktor V = –1 entsteht das phasenkorrigierte Ausgangssignal.

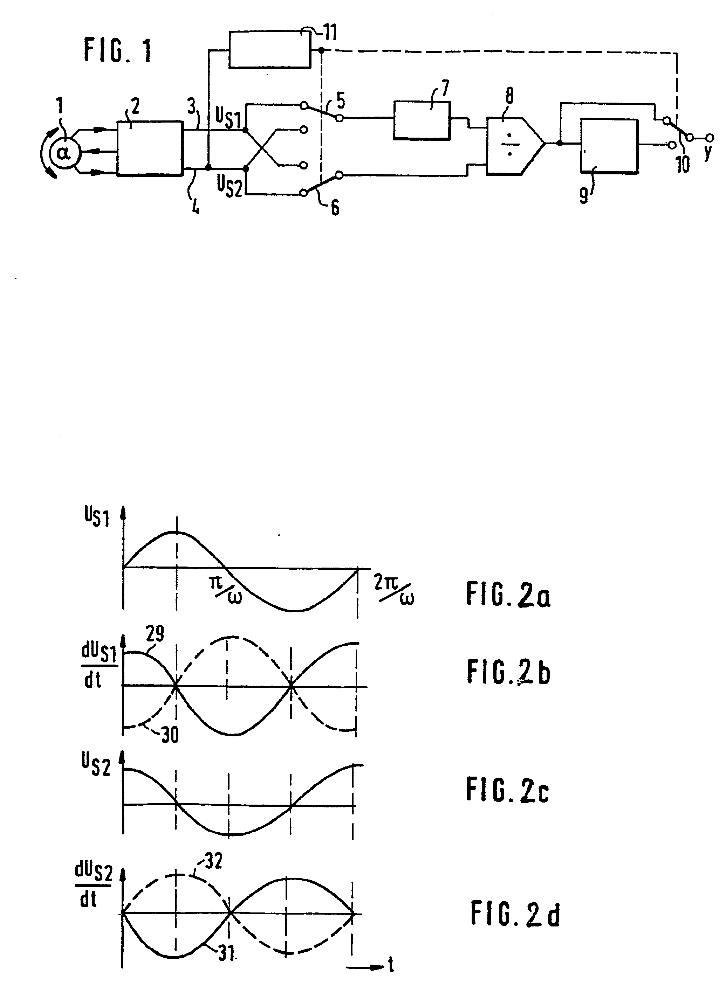

Das Vorzeichen der Winkelgeschwindigkeit kann aus den Ableitungen der Weggebersignale und den Weggebersignalen selbst bestimmt werden. Für konstante Winkelgeschwindigkeit ist in Fig. 2a der zitliche Verlauf der Ausgangsspannung $U_{S1}$ des Ausgangs (3) und in Fig. 2c der zeitliche Verlauf der Ausgangsspannung $U_{S2}$ des Ausgangs (4) dargestellt. Die Fig. 2b zeigt für zwei Winkelgeschwindigkeiten $\omega > 0$ und $\omega < 0$ die beiden von $U_{S1}$ durch Differentiation gebildeten Signale (29) für $\omega > 0$ und (30) für $\omega < 0$. Aus der Fig. 2d sind für zwei Winkelgeschwindigkeiten $\omega > 0$ und $\omega < 0$ zwei durch Differentiation von $U_{S2}$ gebildete Signale (31) und (32) zu ersehen. Die Winkelgeschwindigkeit $\omega$ ist in ihrem Vorzeichen wie folgt von $U_{S1}$, $U_{S2}$ sowie

$$\frac{d U_{S1}}{dt} \text{ und } \frac{d U_{S2}}{dt}$$

abhängig

| $\omega > 0$, wenn | $\omega < 0$, wenn |
|---|---|
| $U_{S_1} > 0$ und $\frac{dU_{S2}}{dt} < 0$ | $U_{S_1} > 0$ und $\frac{dU_{S2}}{dt} > 0$ |
| oder $U_{S_1} < 0$ und $\frac{dU_{S2}}{dt} > 0$ | $U_{S_1} < 0$ und $\frac{dU_{S2}}{dt} < 0$ |
| oder $U_{S_2} > 0$ und $\frac{dU_{S1}}{dt} > 0$ | $U_{S_2} > 0$ und $\frac{dU_{S1}}{dt} < 0$ |
| oder $U_{S_2} < 0$ und $\frac{dU_{S1}}{dt} < 0$ | $U_{S_2} < 0$ und $\frac{dU_{S1}}{dt} > 0$ |

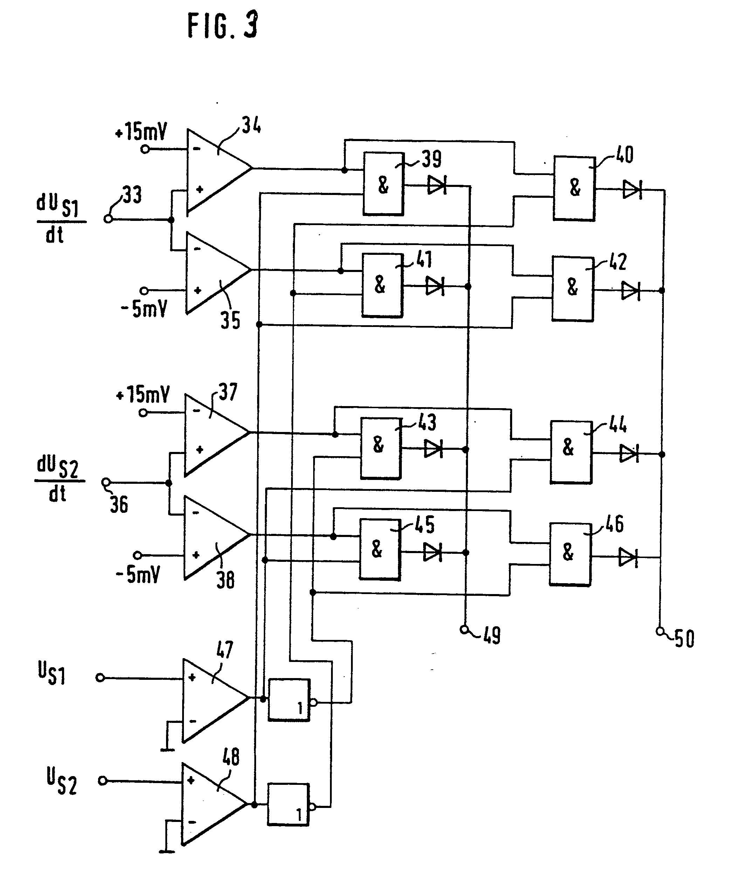

Eine zur Feststellung des Vorzeichens der Winkelgeschwindigkeit $\omega$ zweckmäßige Anordnung ist in Fig. 3 dargestellt. Das Differenzierglied (12a) speist einen Eingang (33), an den der nichtinvertierende Eingang eines ersten Komparators (34) und der invertierende Eingang eines zweiten Komparators (35) angeschlossen sind. Der Komparator (34) ist an seinem invertierenden Eingang mit einem geringen positiven Potential beaufschlagt, d.h. er ändert sein Ausgangssignal bei negativen Eingangspegeln. Der Komparator (35) ist an seinem nichtinvertierenden Eingang mit einem geringen negativen Potential beaufschlagt, d.h. er ändert sein Ausgangssignal bei positiven Eingangspegeln. Ein zweiter Eingang (36), der in Fig. 5 dargestellten Anordnung ist mit dem Ausgang des Differenziergliedes (12b) verbunden. Dem Eingang (36) sind zwei Komparatoren (37, 38) in gleicher Weise wie dem Eingang (33) nachgeschaltet.

Jedem Komparator (34, 35, 37, 38) sind zwei UND-Glieder (39, 40) bzw. (41, 42) bzw. (43, 44) bzw. (45, 46) nachgeschaltet. Die Ausgänge (3) und (4) der Aufbereitungselektronik speisen über zwei Komparatoren (47, 48) jeweils die UND-Glieder (44) und (45) sowie die UND-Glieder (39) und (42). Das Ausgangssignal des Verstärkers (47) ist nach der Invertierung an die UND-Glieder (43) und (46) gelegt. Das Ausgangssignal des Verstärkers (48) ist nach Invertierung an die UND-Glieder (40) und (41) gelegt. Den UND-Gliedern (39, 41, 43) und (45) sind jeweils nicht näher bezeichnete Dioden als Oderverknüpfung nachgeschaltet, deren Kathoden miteinander verbunden sind und einen Ausgang (49) der Schaltung bilden. Den UND-Gliedern (40, 42, 44) und (46) sind ebenfalls jeweils nicht näher bezeichnete Dioden als Oderverknüpfung nachgeschaltet, deren Kathoden einen Ausgang (50) der Schaltung bilden. Die jeweilige Kombination der Pegel an den Ausgängen (49, 59) zeigt das Vorzeichen der Winkelgeschwindigkeit $\omega$ an. Die Pegel der binären Schaltungen können H (high) oder L (low) sein. In der folgenden Tabelle sind für die drei Zustände von $\omega$, nämlich Null, größer Null und kleiner Null die Kombinationen der Pegel an den Ausgängen (49, 50) dargestellt.

| $\omega$ | 49 | 50 |
|---|---|---|
| 0 | L | L |
| > 0 | L | H |
| < 0 | H | L |

Wenn z.B. $d\,U_{S1}/dt$ positiv ist, gibt der Komparator (34) einen H-Pegel aus. Ist zugleich $U_{S2}$ positiv, dann zeigt das UND-Glied (39) am Ausgang H-Pegel, so daß am gemeinsamen Ausgang (49) der durch eine ODER-Verknüpfung miteinander verbundenen UND-Glieder (39, 41, 43, 45) ein H-Pegel entsteht, während am Ausgang (50) ein L-Pegel auftritt. Sind dagegen $U_{S1}$ und $d\,U_{S2}/dt$ positiv, dann zeigt das UND-Glied (44) am Ausgang H-Pegel, wodurch am Ausgang (50) ein H-Pegel auftritt, während der Ausgang (49) einen L-Pegel aufweist. Die Zuordnung zum jeweiligen Vorzeichen der Winkelgeschwindigkeit ergibt sich aus der obigen Tabelle.

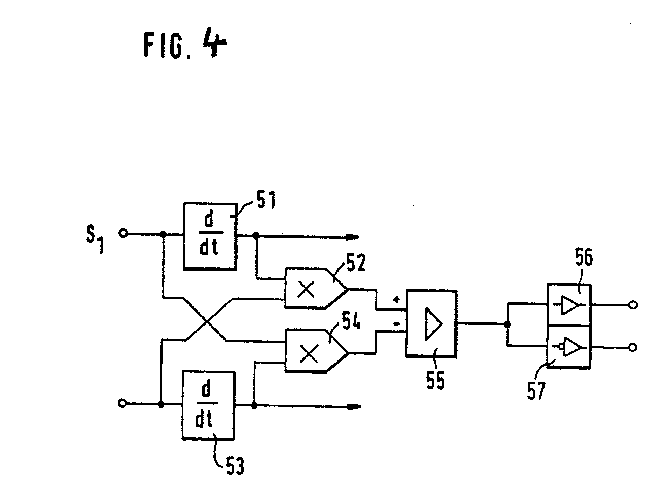

Die Fig. 4 zeigt eine andere Anordnung zur Bestimmung des Vorzeichens der Winkelgeschwindigkeit. Benötigt werden die Signale $U_{S1}$ und $U_{S2}$ sowie deren Ableitungen nach der Zeit. Das Signal $U_{S1}$ wird über ein Differenzierglied (51) an einen Multiplizierer (52) gelegt, dessen zweiter Eingang unmittelbar vom Signal $U_{S2}$ beaufschlagt ist. Das signal $U_{S2}$ wird über ein Differenzierglied (53) einem Multiplizierer (54) zugeführt, dessen zweiter Eingang direkt vom Signal $U_{S1}$ beaufschlagt ist. Die Multiplizierer (52, 54) speisen je einen Eingang eines Differenzverstärkers (55), dem zwei Komparatoren (56, 57) nachgeschaltet sind, von denen einer (156) einen ins Positive verlaufenden Nulldurchgang und der andere (157) einen ins Negative verlaufenden Nulldurchgang feststellt.

Der analoge Multiplizierer (52) bildet das Produkt $U_{S2} \cdot \dfrac{d\,U_{S1}}{dt}$, das in Abhängigkeit von der Polarität der beiden Eingangsgrößen positiv oder negativ sein kann. In gleicher Weise bildet der analoge Multiplizierer (54) das Produkt

$$U_1 \cdot \frac{d\,U_{S2}}{dt}$$

das in Abhängigkeit von der Polarität Eingangsgrößen positiv oder negativ ist. Zwischen der Polarität des mit

EP 0 269 779 B1

einem Analogmultiplizierer erhaltenen Produkts $U_{S2} \cdot d\ U_{S1}/dt$ und der Winkelgeschwindigkeit $\omega$ besteht der in der nachfolgenden Tabelle angegebene Zusammenhang. Der Zusammenhang zwischen der Polarität des mit einem Analogmultiplizierer erhaltenen Produkts $U_{S2} \cdot d\ U_{S1}/dt$ und der Winkelgeschwindigkeit ist ebenfalls in der Tabelle angegeben. Hieraus lassen sich für die Differenz

$$U_2 \cdot \frac{d\ U_{S1}}{dt} - U_1 \frac{d\ U_{S2}}{dt}$$

die in der Tabelle an gegebenen Werte gewinnen

| $Funktion$ | $\omega > 0$ | $\omega = 0$ | $\omega < 0$ |
|---|---|---|---|
| $U_1 \cdot \frac{d\ U_{S2}}{dt}$ | $< 0$ | $0$ | $> 0$ |
| $U_2 \cdot \frac{d\ U_{S1}}{dt}$ | $> 0$ | $0$ | $< 0$ |
| $U_2 \cdot \frac{d\ U_{S1}}{dt} - U_1 \cdot \frac{d\ U_{S2}}{dt}$ | $> 0$ | $0$ | $< 0$ |

Die Komparatoren (56) und (57) geben daher jeweils am Ausgang die drei möglichen Zustände von $\omega$ die folgenden in der nachstehenden Tabelle dargestellten Pegel ab :

| $\omega$ | 56 | 57 |
|---|---|---|
| $0$ | L | L |
| $> 0$ | L | H |
| $< 0$ | H | L |

Die oben beschriebenen Schaltungen zur Feststellung des Betrages und des Vorzeichens der Winkelgeschwindigkeit arbeiten analog. Es ist daher keine lange Rechenzeit für die Berechnung notwendig. Totzeiten entfallen daher. Ein wesentlicher Vorteil der analogen Schaltungen ist in der extrem hohen Signalgeschwindigkeit, verknüpft mit einer unendlich hohen Auflösung zu sehen.

Mit den Anordnungen können Echtzeit-Geschwindigkeitsmessungen, insbesondere auch bei langsamen Bewegungen durchgeführt werden, wobei lineare Bewegungen für die Geschwindigkeitsmessung in Rotationen umgewandelt werden. Schon bei Bruchteilen von Vollkreisumdrehungen stehen die Werte für die Winkelgeschwindigkeit zur Verfügung. Restwelligkeiten und Totzeiten werden vermieden.

## Ansprüche

1. Verfahren zur Bestimmung der Winkelgeschwindigkeit aus zwei von einem Winkelgeber (1) erzeugten Ausgangssignalen, die bezüglich des Drehwinkels eines drehbaren Körpers sinusförmigen Funktionsverlauf aufweisen und gegenseitig um einen Winkel von 90 Grad phasenverschoben sind, wobei der Betrag und das Vorzeichen der Winkelgeschwindigkeit ($\omega$) durch Divisionen der zeitlichen Ableitung eines ersten Ausgangssignals durch das zweite Ausgangssignal bestimmt werden, dadurch gekennzeichnet, daß im Signalbereich, in dem das erste Gleichspannungssignal Nulldurchgänge aufweist, die zeitliche Ableitung des zweiten Gleichspannungssignals durch das erste Gleichspannungssignal dividiert und invertiert wird.

2. Vorrichtung zur Durchführung des Verfahrens nach Anspruch 1, dadurch gekennzeichnet, daß dem Divi-

6

EP 0 269 779 B1

dendeneingang einer Dividierschaltung (8) ein Differenzierglied (7) vorgeschaltet ist, daß dem Differenzierglied und dem Divisoreingang der Dividierschaltung (8) jeweils gemeinsam betätigbare Umschaltkontakte (5, 6) vorgeschaltet sind, über deren Eingänge das erste Ausgangssignal des Winkelgebers im Bereich außerhalb der Nulldurchgänge dem Differenzierglied (7) und das zweite Ausgangssignal dem Divisoreingang Zufühubar sind, und daß die Vorrichtung so ausgebildet ist, daß im Bereich der Nulldurchgänge des zweiten Ausgangssignals die Reihenfolge des ersten und zweiten Ausgangssignals durch die Umschaltkontakte umgekehrt ist und eine Phasenkorrektur durch einen Subtrahierer (9) über einen Umschaltkontakt (10) vorgenommen wird.

3. Vorrichtung nach Anspruch 2, dadurch gekennzeichnet, daß das Differenzglied (7), die Dividierschaltung (8) und die Umschalter (5, 6, 10) analog arbeitende Schaltungen sind.

4. Vorrichtung nach Anspruch 2, dadurch gekennzeichnet, daß zwei Multiplizierer (52, 54), von denen einer mit der Ableitung des ersten Ausgangssignals und dem zweiten Ausgangssignal des Winkelgebers und der zweite mit der Ableitung des zweiten Ausgangssignals des Winkelgebers und dem ersten Ausgangssignal beaufschlagt ist, je mit dem nichtinvertierenden und dem invertierenden Eingang eines Differenzverstärkers (55) verbunden sind, dem zwei Komparatoren nachgeschaltet sind (56, 57), von denen einer ins Positive verlaufende Nulldurchgänge und der andere ins Negative verlaufende Nulldurchgänge des Ausgangssignals des Differenzverstärkers feststellt, und daß bei gleichen Signalpegeln an den Ausgängen der Komparatoren (56, 57) der Betrag der Winkelgeschwindigkeit ($\omega$) Null ist und bei verschiedenen Signalpegeln in Abhängigkeit von den beiden möglichen Rombinationen das Vorzeichen der Winkelgeschwindigkeit entweder positiv oder negativ ist.

5. Vorrichtung nach Anspruch 4, dadurch gekennzeichnet, daß die Ableitungen der beiden Ausgangssignale des Winkelgebers je an einen bei einem minimalen positiven oder negativen Referenzpotential ansprechenden Komparator (34, 37 ; 35, 38) gelegt sind, daß jedem Komparator (34, 35, 37, 38) zwei UND-Glieder (39, 40 ; 41, 42 ; 43, 44 ; 45, 46) nachgeschaltet sind, daß die UND-Glieder (39. 40), die an den von der Ableitung des ersten Ausgangssignals und einem positiven Referenzpotential beaufschlagten Komparator (34) angeschlossen sind, je vom zweiten Ausgangssignal und dessen Invertierung beaufschlagt sind, daß die UND-Glieder (41, 42), die an den von der Ableitung des ersten Ausgangssignals und einem negativen Referenzpotential beaufschlagten Komparator (35) angeschlossen sind, je vom invertierten zweiten Ausgangssignal und vom zweiten Ausgangssignal beaufschlagt sind, daß die UND-Glieder (43, 44), die an den von der Ableitung des zweiten Ausgangssignals und von einem positiven Referenzpotential beaufschlagten Komparator (37) angeschlossen sind, je vom invertierten ersten Ausgangssignal und vom ersten Ausgangssignal beaufschlagt sind, daß die UND-Glieder (45, 46), die an den von der Ableitung des zweiten Ausgangssignals und einem negativen Referenzpotential beaufschlagten Komparator angeschlossen sind, je vom ersten Ausgangssignal und dessen Invertierung beaufschlagt sind, daß die UND-Glieder (39, 41, 43, 45 ; 40, 42, 44, 46) der Komparatoren in zwei Reihen durch ODER-Verknüpfung zusammengefaßt sind, in denen je ein UND-Glied der Komparatoren enthalten ist, und daß bei gleichen Signalpegeln an den ODER-Verknüpfungen die Winkelgeschwindigkeit Null und bei verschiedenen Signalpegeln in Abhängigkeit von den beiden möglichen Kombinationen das Vorzeichen der Winkelgeschwindigkeit entweder positiv oder negativ ist.

## Claims

1. Method of determining angular velocity from two output signals generated by a phase-angle sensor (1), which in relation to the angle of rotation of a rotatable body have a sinusoidal functional variation and are mutually phase-shifted by an angle of 90 degrees, the modulus and the sign of the angular velocity ($\omega$) being determined by divisions of the time derivative of a first output signal by the second output signal, characterized in that in the signal region in which the first direct voltage signal has zero-axis crossings the time derivative of the second direct voltage signal is divided by the first direct voltage signal and inverted.

2. Device for executing the method according to Claim 1, characterized in that a differentiating element (7) is connected upstream of the dividend input of a dividing circuit (8), in that commonly operable change-over contacts (5, 6) are connected in each case upstream of the differentiating element and the divisor input of the dividing circuit (8), via the inputs of which contacts the first output signal of the phase-angle sensor in the region outside the zero-axis crossings can be fed to the differentiating element (7), and the second output signal can be fed to the divisor input, and in that the device is constructed such that in the region of the zero-axis crossings of the second output signal the sequence of the first and second output signal is reversed by the change-over contacts and a phase correction is undertaken by a subtracter (9) via a change-over contact (10).

3. Device according to Claim 2, characterized in that the differentiating element (7), the dividing circuit (8) and the change-over switches (5, 6, 10) are circuits operating in an analog fashion.

4. Device according to Claim 2, characterized in that two multipliers (52, 54), to one of which the derivative

7

of the first output signal and the second output signal of the phase-angle sensor are applied, and to the second of which the derivative of the second output signal of the phase-angle sensor and the first output are applied, are each connected to the non-inverting and to the inverting input of a differential amplifier (55), downstream of which two comparators (56, 57) are connected of which one determines positive-going zero-axis crossings and the other determines negative-going zero-axis crossings of the output signal of the differential amplifier, and in that given equal signal levels at the outputs of the comparators (56, 57) the modulus of the angular velocity (ω) is zero, and given different signal levels the sign of the angular velocity is either positive or negative, depending upon the two possible combinations.

5. Device according to Claim 4, characterized in that the derivatives of the two output signals of the phase-angle sensor are each applied to a comparator (34, 37 ; 35, 38) responding at a minimum positive or negative reference potential, in that two AND elements (39, 40 ; 41, 42 ; 43, 44 ; 45, 46) are connected downstream of each comparator (34, 35, 37, 38), in that the second output signal and its inversion are applied in each case to AND elements (39, 40), which are connected to the comparator (34), to which the derivative of the first output signal and a positive reference potential are applied, in that the inverted second output signal and the second output signal are applied in each case to the AND elements (41, 42), which are connected to the comparator (35), to which the derivative of the first output signal and a negative reference potential are applied, in that the inverted first output signal and the first output signal are applied in each case to the AND elements (43, 44), which are connected to the comparator (37), to which the derivative of the second output signal and a positive reference potential are applied, in that the first output signal and its inversion are applied in each case to the AND elements (45, 46), which are connected to the comparator, to which the derivative of the second output signal and a negative reference potential are applied, in that the AND elements (39, 41, 43, 45 ; 40, 42, 44, 46) of the comparators are combined by ORing into two rows in which one AND element each of the comparators is contained, and in that given equal signal levels at the ORINGS the angular velocity is zero, and given different signal levels the sign of the angular velocity is either positive or negative, depending upon the two possible combinations.

## Revendications

1. Procédé de détermination de la vitesse angulaire à partir de deux signaux de sortie produits par un capteur (1) d'angle, qui présentent une allure de fonction sinusoïdale par rapport à l'angle de rotation et qui sont déphasés l'un par rapport à l'autre de 90° d'angle, la valeur absolue et le signe de la vitesse angulaire (ω) étant déterminés par des divisions de la dérivée par rapport au temps d'un premier signal de sortie par le second signal de sortie, procédé caractérisé en ce que, dans la zone de signal dans laquelle le premier signal en tension continue présente des passages par zéro, la dérivée par rapport au temps du second signal en tension continue est divisée par le premier signal en tension continue et est inversée.

2. Dispositif pour l'exécution du procédé selon la revendication 1, dispositif caractérisé en ce qu'un élément différentiateur (7) est connecté en amont de l'entrée des dividendes d'un circuit diviseur (8), en ce que des contacts (5, 6) de commutation, susceptibles d'être actionnés en commun dans chaque cas, sont connectés en amont de l'élément différentiateur et de l'entrée des diviseurs du circuit diviseur (8), par l'intermédiaire des entrées desquels contacts le premier signal de sortie du capteur d'angle peut être fourni, dans la zone en dehors des passages par zéro, à l'élément différentiateur (7), et le second signal de sortie peut être fourni à l'entrée des diviseurs, et en ce que le dispositif est conformé de façon telle que dans la zone des passages par zéro du deuxième signal de sortie, l'ordre du premier signal de sortie et du second signal de sortie est inversé par les contacts de commutation et une une correction de phase est effectuée par un élément sous-tracteur (9) par l'intermédiaire d'un contact (10) de commutation.

3. Dispositif selon la revendication 2, caractérisé en ce que l'élément différentiateur (7), le circuit diviseur (8) et les commutateurs (5, 6, 10) sont des circuits qui travaillent de façon analogique.

4. Dispositif selon la revendication 2, caractérisé en ce que deux éléments multiplicateurs (52, 54),dont l'un reçoit la dérivée du premier signal de sortie et le second signal de sortie du capteur d'angle, et dont le second reçoit la dérivée du second signal de sortie du capteur d'angle et le premier signal de sortie, sont chacun reliés à l'entrée de non-inversion et à l'entrée d'inversion d'un amplificateur différentiateur (55), en aval duquel sont montés deux comparateurs (56, 57), dont l'un constate les passages par zéro allant vers le positif, et dont l'autre constate les passages par zéro allant vers le négatif, du signal de sortie de l'amplificateur différentiateur, et en ce que, pour des niveaux de signal égaux, la valeur absolue de la vitesse angulaire (ω) est nulle aux sorties des comparateurs (56, 57) et le signe de la vitesse angulaire est positif ou négatif, dans le cas de niveaux de signal différents, en fonction des deux combinaisons possibles.

5. Dispositif selon la revendication 4, caractérisé en ce que les dérivées des deux signaux de sortie du capteur d'angle sont appliquées chacune à un comparateur (34, 37 ; 35, 38), qui répond dans le cas où existe un potentiel de référence minimum positif ou négatif ; en ce que deux éléments ET (39, 40 ; 41, 42 ; 43, 44 ; 45, 46) sont montés en aval de chaque comparateur (34, 35, 37, 38) ; en ce que les éléments ET (39, 40) qui sont raccordés aux comparateurs (34) recevant la dérivée du premier signal de sortie et soumis à un potentiel de référence positif, reçoivent chacun le deuxième signal de sortie et l'inverse de celui-ci ; en ce que les éléments ET (41, 42), qui sont connectés au comparateur (35) recevant la dérivée du premier signal de sortie et un potentiel de référence négatif, reçoivent le second signal de sortie inversé et le second signal de sortie ; en ce que les éléments ET (43, 44), qui sont connectés au comparateur recevant la dérivée du second signal de sortie et soumis à un potentiel de référence positif, reçoivent chacun le premier signal de sortie inversé et le premier signal de sortie ; en ce que les éléments ET (45, 46) qui sont connectés à un comparateur, recevant la dérivée du second signal de sortie et un potentiel de référence négatif, reçoivent un premier signal de sortie et son inverse ; en ce que les éléments ET (39, 41, 43, 45 ; 40, 42, 44, 46) des comparateurs sont rassemblés par une liaison OU en deux rangées, dans chacune desquelles est contenu un élément ET des comparateurs, et en ce que, dans le cas de niveaux de signal égaux aux liaisons OU, la vitesse angulaire est nulle, alors que, dans le cas de niveaux de signal différents, le signe de la vitesse angulaire est soit positif, soit négatif, en fonction des deux combinaisons possibles.

FIG. 1

FIG. 2a

FIG. 2b

FIG. 2c

FIG. 2d

# FIG. 3

FIG. 4